# EUROPEAN PATENT APPLICATION

(11) **EP 4 280 724 A1**
(43) Date of publication of application: **22.11.2023**
(21) Application number: 22738918.6
(22) Date of filing: 06.01.2022
(51) Int. Cl.: H04W 68/02, H04L 5/00

(54) **RESOURCE CONFIGURATION METHOD AND APPARATUS, AND RESOURCE ACQUISITION METHOD AND APPARATUS**

(30) Priority: 15.01.2021 CN 202110057662
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); CHENG, Fangchen, Beijing 100085 (CN); SU, Yuwan, Beijing 100085 (CN)
(74) Representative: Studio Torta S.p.A.
(86) International application number: PCT/CN2022/070509
(87) International publication number: WO 2022/152037

(57) **Abstract**

The present disclosure provides a resource configuring method, a resource obtaining method and devices. The disclosed method includes: configuring, by a network device, a first resource set, wherein the first resource set is used to carry a paging early indication (PEI). The first resource set includes at least one of the following: a first control resource set zero; or, a first common control resource set; or, a first search space set zero; or, a first common search space set; or, a first subset of a control resource set zero; or, a first subset of a common control resource set; or, a first subset of a search space set zero; or a first subset of a common search space set.

## Description

### CROSS-REFERENCE TO RELATED APPLICATION

This application claims the priority of Chinese Application No. 202110057662.2, filed on January 15, 2021, the disclosure of which is incorporated in its entirety by reference herein.

### TECHNICAL FIELD

The present disclosure relates to the field of communication technologies, and in particular to a resource configuring method, a resource obtaining method, a resource configuring device and a resource obtaining device.

### BACKGROUND

In the related art, it is supported that in a radio resource control-idle state (RRC-idle) state, a paging early indication (PEI) is used to indicate whether it is necessary to monitor a paging message. A terminal monitors the PEI before monitoring the paging message, thereby reducing invalid monitoring of paging messages on the terminal side and further reducing power consumption of the terminal. However, there is no configuration scheme for resources carrying the PEI in the related art.

### SUMMARY

Embodiments of the present disclosure provide a resource configuring method, a resource obtaining method, a resource configuring device and a resource obtaining device, which can solve the problem of how to configure a resource for carrying PEI.

In order to solve the above technical problems, the present disclosure is implemented as follows.

A resource configuring method is provided and includes:
configuring, by a network device, a first resource set, wherein the first resource set is used to carry a paging early indication (PEI);
wherein the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set.

Optionally, the method further includes:
transmitting, by the network device, the PEI according to the first resource set.

Optionally, the method further includes:
configuring, by the network device, a second resource set.

Optionally, the method further includes:
transmitting a paging message according to the second resource set.

Optionally, the configuring the first resource set, includes:
according to a master information block (MIB) or system information block (SIB), configuring the first resource set;
   or,
according to reference information, configuring the first resource set;
wherein the reference information includes at least one of the following:
   resource information of a reference signal; or,
   resource information of a reference resource; or,
   a parameter for determining resource information of a reference signal; or,
   a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, wherein the second resource set is a resource set for transmitting a paging message.

Optionally, according to reference information, configuring the first resource set, includes:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

Optionally, the configuring the time-domain resource of the first resource set by using the preset mapping function according to the reference information, includes:
according to association relationship between beam information of the reference information and beam information of the first resource set, configuring a time-domain resource of a beam of the first resource set by using the preset mapping function.

Optionally, the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set;
the third resource set includes at least one of the following:
a paging search space set; or,
a random access search space set; or,
a search space set zero; or,
a system message search space set.

One embodiment of the present disclosure further provides a resource obtaining method, which includes:
obtaining, by a terminal, a first resource set, wherein the first resource set is used to carry a paging early indication (PEI);
wherein the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set.

Optionally, the method further includes: receiving the PEI according to the first resource set.

Optionally, the method further includes: obtaining a second resource set.

Optionally, the method further includes: receiving a paging message according to the second resource set.

Optionally, the obtaining the first resource set, includes:
obtaining the first resource set according to a master information block (MIB) or system information block (SIB); or,
obtaining the first resource set according to reference information;
wherein the reference information includes at least one of the following:
   resource information of a reference signal; or,
   resource information of a reference resource; or,
   a parameter for determining resource information of a reference signal; or,
   a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, wherein the second resource set is a resource set for transmitting a paging message.

Optionally, the obtaining the first resource set according to the reference information, includes:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

Optionally, the obtaining the time-domain resource of the first resource set by using the preset mapping function according to the reference information, includes:
according to association relationship between beam information of the reference information and beam information of the first resource set, obtaining a time-domain resource of a beam of the first resource set by using the preset mapping function.

Optionally, the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set;
the third resource set includes at least one of the following:
a paging search space set; or,
a random access search space set; or,
a search space set zero; or,
a system message search space set.

One embodiment of the present disclosure further provides a resource configuring device, which includes: a memory, a transceiver and a processor;
wherein the memory is used to store a computer program; the transceiver is used to transmit and receive data under the control of the processor; the processor is used to read the computer program in the memory and perform the following operations:
configuring a first resource set, wherein the first resource set is used to carry a paging early indication (PEI);
wherein the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set.

Optionally, the processor is further configured to perform the following operations:
according to a master information block (MIB) or system information block (SIB), configuring the first resource set;
   or,
according to reference information, configuring the first resource set;
wherein the reference information includes at least one of the following:
   resource information of a reference signal; or,
   resource information of a reference resource; or,
   a parameter for determining resource information of a reference signal; or,
   a parameter for determining resource information of a reference resource.

Optionally, the processor is further configured to perform the following operations:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

Optionally, the processor is further configured to perform the following operations:
according to association relationship between beam information of the reference information and beam information of the first resource set, configuring a time-domain resource of a beam of the first resource set by using the preset mapping function.

Optionally, the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

One embodiment of the present disclosure further provides a resource obtaining device, which includes: a memory, a transceiver and a processor;
wherein the memory is used to store a computer program; the transceiver is used to transmit and receive data under the control of the processor; the processor is used to read the computer program in the memory and perform the following operations:
obtaining a first resource set, wherein the first resource set is used to carry a paging early indication (PEI);
wherein the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set

Optionally, the processor is further configured to perform the following operations:
obtaining the first resource set according to a master information block (MIB) or system information block (SIB); or,
obtaining the first resource set according to reference information;
wherein the reference information includes at least one of the following:
   resource information of a reference signal; or,
   resource information of a reference resource; or,
   a parameter for determining resource information of a reference signal; or,
   a parameter for determining resource information of a reference resource.
Optionally, the processor is further configured to perform the following operations:
   configuring at least one of time-domain location information and frequency-domain location information of the first resource set, by using a preset mapping function, according to the reference information;
   wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
   wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

Optionally, the processor is further configured to perform the following operations:
according to association relationship between beam information of the reference information and beam information of the first resource set, obtaining a time-domain resource of a beam of the first resource set by using the preset mapping function.

Optionally, the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

One embodiment of the present disclosure further provides a resource configuring device, which includes:
a first configuration unit configured to configure a first resource set, wherein the first resource set is used to carry a paging early indication (PEI);
wherein the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set.
Optionally, the device further includes:
   a first transmission unit configured to transmit the PEI according to the first resource set.

Optionally, the device further includes:
a second configuration unit is configured to configure a second resource set.

Optionally, the device further includes:
a second transmission unit configured to transmit a paging message according to the second resource set.

Optionally, the first configuration unit is configured to,
according to a master information block (MIB) or system information block (SIB), configure the first resource set;
   or,
according to reference information, configure the first resource set;
wherein the reference information includes at least one of the following:
   resource information of a reference signal; or,
   resource information of a reference resource; or,
   a parameter for determining resource information of a reference signal; or,
   a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, wherein the second resource set is a resource set for transmitting a paging message.

Optionally, the first configuration unit is configured to configure at least one of time-domain location information and frequency-domain location information of the first resource set, by using a preset mapping function, according to the reference information;

wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;

wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

Optionally, the first configuration unit is configured to, according to association relationship between beam information of the reference information and beam information of the first resource set, configure a time-domain resource of a beam of the first resource set by using the preset mapping function.

Optionally, the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set;
the third resource set includes at least one of the following:
a paging search space set; or,
a random access search space set; or,
a search space set zero; or,
a system message search space set.

One embodiment of the present disclosure further provides a resource obtaining device, which includes:
a first obtaining unit configured to obtain a first resource set, wherein the first resource set is used to carry a paging early indication (PEI);
wherein the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set.

Optionally, the device further includes:
a first receiving unit configured to receive the PEI according to the first resource set.

Optionally, the device further includes:
a second obtaining unit configured to obtain a second resource set.

Optionally, the device further includes:
a second receiving unit configured to receive a paging message according to the second resource set.

Optionally, the first obtaining unit configured to,
obtain the first resource set according to a master information block (MIB) or system information block (SIB); or,
obtain the first resource set according to reference information;
wherein the reference information includes at least one of the following:
   resource information of a reference signal; or,
   resource information of a reference resource; or,
   a parameter for determining resource information of a reference signal; or,
   a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, wherein the second resource set is a resource set for transmitting a paging message.

Optionally, the first obtaining unit configured to configure at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

Optionally, the first obtaining unit is configured to, according to association relationship between beam information of the reference information and beam information of the first resource set, obtain a time-domain resource of a beam of the first resource set by using the preset mapping function.

Optionally, the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set;
the third resource set includes at least one of the following:
a paging search space set; or,
a random access search space set; or,
a search space set zero; or,
a system message search space set.

One embodiment of the present disclosure further provides a processor-readable storage medium, including a program instruction stored thereon; wherein the program instruction is used to cause a processor to perform steps of the above resource configuring method, or to perform steps of the above resource obtaining method.

In the embodiment of the present disclosure, the first resource set used to carry the paging early indication (PEI) is configured, so that transmission and reception of paging messages can be indicated based on the PEI, thereby avoiding invalid monitoring of paging PDCCHs by the terminal and then reducing power consumption of the terminal.

### BRIEF DESCRIPTION OF THE DRAWINGS

In order to illustrate technical solutions according to embodiments of the present disclosure more clearly, drawings to be used in the description of the embodiments will be described briefly hereinafter. Apparently, the drawings described hereinafter are only some embodiments of the present disclosure, and other drawings may be obtained by those skilled in the art according to those drawings without creative work.
FIG. 1 shows a diagram of a network system to which an embodiment of the present disclosure is applicable;
FIG. 2 shows a schematic flowchart of a resource configuring method according to an embodiment of the present disclosure;
FIG. 3 is a first schematic diagram showing relationship between a first control resource set zero and a second control resource set zero according to an embodiment of the present disclosure;
FIG. 4 is a second schematic diagram showing relationship between a first control resource set zero and a second control resource set zero according to an embodiment of the present disclosure;
FIG. 5 is a third schematic diagram showing relationship between a first control resource set zero and a second control resource set zero according to an embodiment of the present disclosure;
FIG. 6 is a fourth schematic diagram showing relationship between a first control resource set zero and a second control resource set zero according to an embodiment of the present disclosure;
FIG. 7 is a first schematic diagram showing relationship between a first common search space set and a second common search space set according to an embodiment of the present disclosure;
FIG. 8 is a second schematic diagram showing relationship between a first common search space set and a second common search space set according to an embodiment of the present disclosure;
FIG. 9 is a schematic diagram showing relationship between a first subset and a reference signal according to an embodiment of the present disclosure;
FIG. 10 shows a schematic flowchart of a resource obtaining method according to an embodiment of the present disclosure;
FIG. 11 shows a block diagram of a resource configuring device according to an embodiment of the present disclosure;
FIG. 12 shows a block diagram of a resource obtaining device according to an embodiment of the present disclosure;
FIG. 13 is a schematic diagram showing modules of a resource configuring device according to an embodiment of the present disclosure; and
FIG. 14 is a schematic diagram showing modules of a resource obtaining device according to an embodiment of the present disclosure.

### DETAILED DESCRIPTION

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) system, time division synchronous code division multiple access (TD-SCDMA) system, general packet radio service (GPRS) system, long term evolution (LTE) system (including TD-LTE and FDD LTE), long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS/5GC).

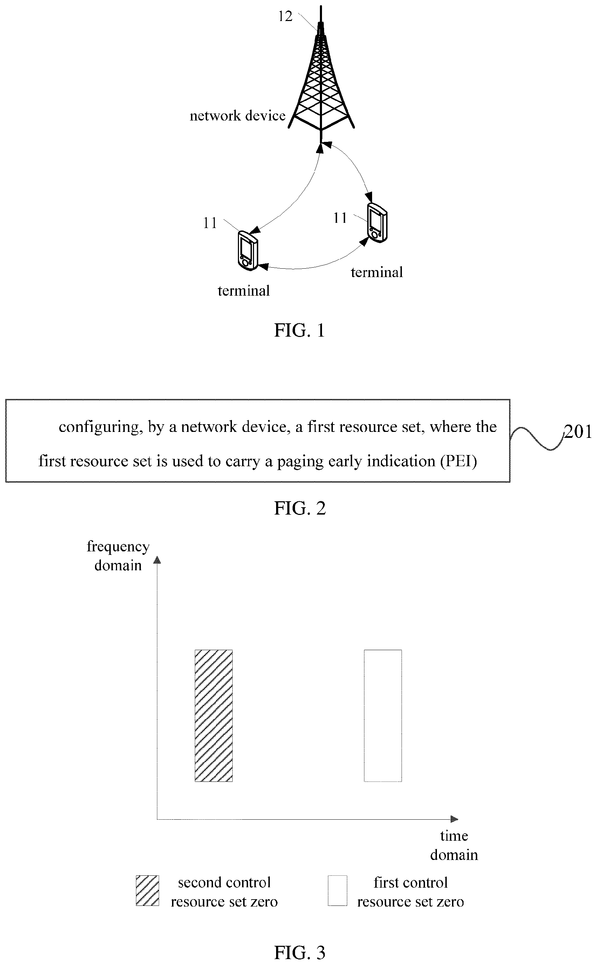

FIG. 1 shows a diagram of a wireless communication system to which an embodiment of the present disclosure is applicable. The wireless communication system includes a terminal 11 and a network device 12. The terminal 11 may also be referred as terminal device or user equipment (UE). The terminal 11 may be a terminal side device such as a mobile phone, a tablet personal computer, a laptop computer which may also be referred as a notebook computer, a personal digital assistant (PDA), a palmtop computer, a netbook, an ultra-mobile personal computer (UMPC), a mobile internet device (MID), a wearable device, vehicle user equipment (VUE), and a pedestrian user equipment (PUE). The wearable device includes bracelets, earphones, glasses, etc. It is to be noted that the specific type of the terminal 11 is not limited in the embodiment of the present disclosure. The network device 12 may be a base station or a core network. The base station may be referred to as a Node B, an evolved Node B, an access point, a base transceiver station (BTS), a radio base station, a radio transceiver, a basic service set (BSS), an extended service set (ESS), a Node B, an evolved Node B (eNB), a home node B, a home evolved node B, a WLAN access point, a WiFi node, a transmitting receiving point (TRP), or some other suitable term in the field, as long as the same technical effect is achieved, the base station is not limited to specific technical terms. It is to be noted that in the embodiment of the present disclosure, the base station in the NR system is only taken as an example, but the specific type of the base station is not limited thereto.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

As shown in FIG. 2, one embodiment of the present disclosure provides a resource configuring method, which includes:
Step 201: configuring, by a network device, a first resource set, where the first resource set is used to carry a paging early indication (PEI).

The first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

In the embodiment of the present disclosure, configuring the first resource set specifically refers to configuring at least one of time-domain resource and frequency-domain resource corresponding to the first resource set.

It is to be noted that the control resource set zero in the embodiment of the present disclosure may also be described as control resource set #0, that is, CORESET #0. The above first control resource set zero may also be described as first CORESET #0.

In the embodiment of the present disclosure, the first resource set used to carry the paging early indication (PEI) is configured, so that transmission and reception of paging messages can be indicated based on the PEI, thereby avoiding invalid monitoring of paging PDCCHs by the terminal and then reducing power consumption of the terminal.

Optionally, the resource configuring method in the embodiment of the present disclosure further includes:
transmitting, by the network device, the PEI according to the first resource set.

Optionally, the resource configuring method in the embodiment of the present disclosure further includes:
configuring, by the network device, a second resource set.

Here, the above second resource set is a resource set for transmitting a paging message.

Optionally, the resource configuring method in the embodiment of the present disclosure further includes:
transmitting a paging message according to the second resource set.

Optionally, the configuring the first resource set, includes:
according to a master information block (MIB, according to an agreement) or system information block (SIB), configuring the first resource set;
   or,
according to reference information, configuring the first resource set.

The reference information includes at least one of the following:
resource information of a reference signal; or,
resource information of a reference resource; or,
a parameter for determining resource information of a reference signal; or,
a parameter for determining resource information of a reference resource.

Further optionally, the reference signal includes at least one of the following:
a paging message; or,
a synchronization signal; or,
a tracking reference signal (TRS); or,
a channel state information-reference signal (CSI-RS).

Further, optionally, the reference resource includes: a second resource set, where the second resource set is a resource set for transmitting a paging message.

Optionally, according to reference information, configuring the first resource set, includes:
configuring at least one of time-domain location information and frequency-domain location information of the first resource set, by using a preset mapping function, according to the reference information;
where the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
where the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Further, optionally, the preset mapping function includes at least one of the following:
a first mapping function, a second mapping function, or a third mapping function;
where the first mapping function is used to indicate a mapping relationship between a radio frame corresponding to the reference information and a radio frame of the first resource set;
where the second mapping function is used to indicate a mapping relationship between a slot of the first resource set and at least one of a radio frame, a subframe and a slot corresponding to the reference information;
where the third mapping function is used to indicate a mapping relationship between a symbol of the first resource set and at least one of a radio frame, a subframe, a slot and a symbol corresponding to the reference information.

Optionally, the configuring the time-domain resource of the first resource set by using the preset mapping function according to the reference information, includes:
according to association relationship between beam information of the reference information and beam information of the first resource set, configuring a time-domain resource of a beam of the first resource set by using the preset mapping function.

Further, optionally, the preset mapping function includes at least one of the following:
a fourth mapping function, a fifth mapping function, a sixth mapping function, a seventh mapping function and/or an eighth mapping function.

The fourth mapping function is used to indicate a mapping relationship between a radio frame corresponding to a beam of the reference information and a radio frame of a beam of the first resource set.

The fifth mapping function is used to indicate a mapping relationship between a slot of a beam of the first resource set and at least one of a slot and subframe corresponding to a beam of the reference information.

The sixth mapping function is used to indicate a mapping relationship between a first time-domain location corresponding to a beam of the reference information and a time-domain location of a beam of the first resource set. The first time-domain location is a time-domain location of an i-th valid monitoring opportunity corresponding to the reference information, where i is greater than or equal to 1.

The seventh mapping function is used to indicate a mapping relationship between a first parameter and a radio frame of a beam of the first resource set. The first parameter is a parameter for determining a radio frame corresponding to a beam of a reference signal or a reference resource.

The eighth mapping function is used to indicate a mapping relationship between a second parameter and a slot of a beam of the first resource set. The second parameter is a parameter for determining at least one of a slot or subframe corresponding to a beam of a reference signal or a reference resource.

Optionally, in the resource configuring method of the embodiment of the present disclosure, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set.

The third resource set includes at least one of the following:
a paging search space set; or,
a random access search space set; or,
a search space set zero; or,
a system message search space set.

Optionally, the foregoing system message search space set may be a SIB1 search space set or other system message search space set.

The resource configuring method of the present disclosure will be described hereinafter in combination with specific examples.

### Example 1

At step 1, a base station configures a second control resource set zero and at least one first control resource set zero, or, the base station configures a second common control resource set and at least one first common control resource set.

Specifically, configuring the first control resource set zero or the first common control resource set, includes at least one of the following:
configuring time-domain location information; or,
configuring frequency-domain location information.

The time-domain location information includes at least one of the following:
a time-domain location of a time-domain resource unit, where the time-domain resource unit includes at least one of a radio frame, a subframe, a slot, or a symbol; or,
offset information of the time-domain location of the time-domain resource unit relative to a time-domain location of the reference information.

The frequency-domain location information includes at least one of the following:
a frequency-domain location of a frequency-domain resource unit, where the frequency-domain resource unit includes at least one of a resource block group, a resource block, a resource unit group, and a frequency-domain location of a resource unit; or,
offset information of the frequency-domain location of the frequency-domain resource unit relative to a frequency-domain location of the reference information.

As shown in FIG. 3, FIG. 4, FIG. 5 and FIG. 6, a first control resource set zero and a second control resource set zero are configured. The first control resource set zero is a control resource set used to carry PEI. The second control resource set zero is used to carry information of existing control resource set zero.

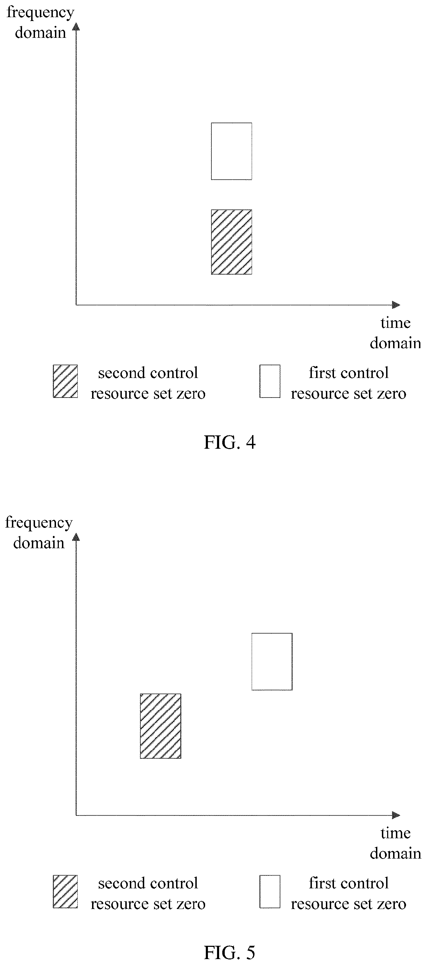

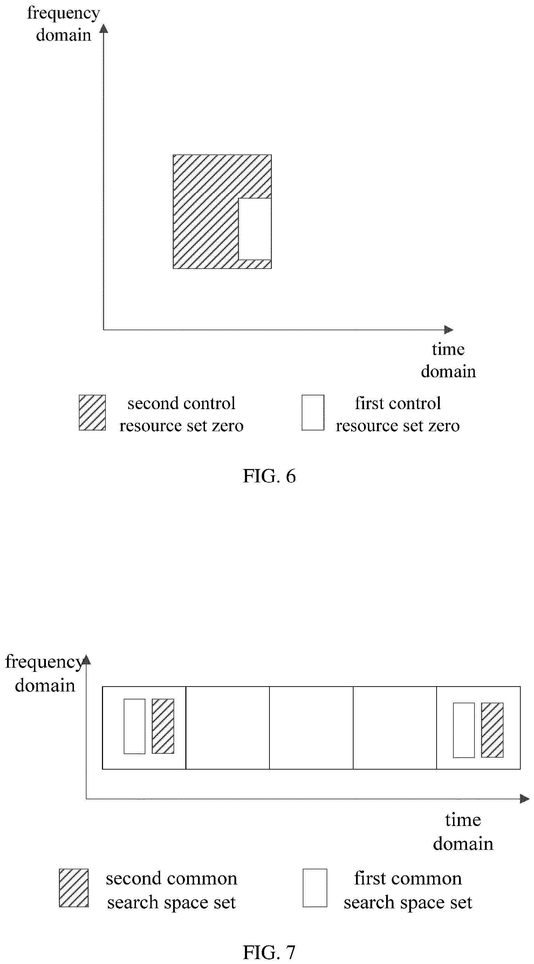

The first control resource set zero and the second control resource set zero can be multiplexed in the time domain; for example, as shown in FIG. 3, the second control resource set zero is configured as an i-th symbol of a slot N, and the first control resource set zero is configured as a (i+x)-th symbol of the slot N; or, as shown in FIG. 4, the second control resource set zero is a first frequency-domain location of a slot N, and the first control resource set zero is a second frequency-domain location of the slot N; or, as shown in FIG. 5, the time-domain locations and frequency-domain locations of the second control resource set zero and the first control resource set zero are different; or, as shown in FIG. 6, the second control resource set zero includes the first control resource set zero, that is, the first control resource set zero is a subset of the second control resource set zero; optionally, i, x or N is a positive integer.

The above configured parameters can be configured in one of the following two ways:
the base station configures parameters through a MIB or SIB;
the base station and the terminal obtain configured parameters in an agreed manner, where the agreed manner includes at least one of the following:
according to the above reference information, configuring at least one of time-domain location information and frequency-domain location information of the first resource set and the second resource set.

Specifically, an offset of a time-domain location of a symbol of the second control resource set zero relative to a time-domain location of the reference signal is a first time-domain offset; an offset of a time-domain location of the first control resource set zero relative to the time-domain location of the reference signal is a second time-domain offset; or,
the time-domain location of the symbol of the second control resource set zero is the first time-domain location, and the time-domain location of the symbol of the first control resource set zero is the second time-domain location; or,
an offset of a frequency-domain location of the second control resource set zero relative to the frequency-domain location of the reference signal is a first frequency-domain offset, and an offset of the frequency-domain location of the first control resource set zero relative to the frequency-domain location of the reference signal is a second frequency-domain offset; for example, a frequency-domain offset of the second control resource set zero is k resource blocks, and a frequency-domain offset of the first control resource set zero is m resource blocks; or,
the frequency-domain location of the second control resource set zero is a first frequency-domain location, and a time-domain location of a symbol of the first control resource set zero is a first frequency-domain offset relative to the first frequency-domain location.

Taking the reference signal being a paging message as an example, configuration of the first resource set and the second resource set is described hereinafter.

1-1: a time-domain location of a radio frame where the first resource set is located is determined by a location of a target radio frame of a paging message, and can be expressed as a function F1(PF_SFN) of a time-domain location of a radio frame of PDCCH where the paging message is located, where PF_SFN represents a time-domain location of a radio frame of PDCCH where the paging message is located, which can be obtained according to related art, and F1 represents a functional relationship from PF_SFN to the time-domain location of the radio frame of the first control resource set.

The functional relationship F1 may be expressed as Y1=X1, where Y1 represents a time-domain location of a radio frame of the first control resource set, X1 represents a time-domain location of a radio frame of PDCCH where the paging message is located; or, the functional relationship F1 may be expressed as Y1=X1 +offset1, where Y1 represents a time-domain location of a radio frame of the first control resource set, X1 represents a time-domain location of a radio frame of PDCCH where the paging message is located, and offset1 represents an offset from the time-domain location of the radio frame where the first resource set is located to the time-domain location of the radio frame where the paging message is located. That is, the time-domain location of the radio frame where the first resource set is located, is determined by the time-domain location of the target radio frame where PDCCH of the paging message is located, or, is determined by an offset relative to the time-domain location of the radio frame where PDCCH of the paging message is located.

Further, a time-domain location of the first resource set relative to a slot of the radio frame=Y1*the number of subframes in each radio frame*the number of slots in each subframe+a slot offset of a time-domain location of a slot where the first resource set is located relative to a time-domain location of a target radio frame where PDCCH of the paging message is located, where the slot offset may be configured by signaling.

1-2: A time-domain location where the first resource set is located is determined by a time-domain location of a slot where the paging message is located, and can be expressed as a function F2(PO_slot) or a function F3(PF_SFN, PO_slot) of a time-domain location of a target slot of PDCCH where the paging message is located. PF_SFN is the same as that in 1-1; PO_slot represents a time-domain location of a slot of PDCCH where the paging message is located, which can be obtained by related art. F2 represents a function mapping from PO_slot to the time-domain location of the slot of the first resource set. F3 represents a function mapping from at least one variable in PF_SFN and PO_slot to the time-domain location of the slot of the first resource set.

The functional relationship F2 can be expressed as Y2=X2, where Y2 represents a time-domain location of a slot of the first resource set, X2 represents a time-domain location of a slot of PDCCH where the paging message is located. Or, the functional relationship F2 can be expressed as Y2=PF_SFN*number of subframes per radio frame*number of slots per subframe+PO_slot, or, Y2=X2+offset2, where the offset2 represents a slot offset from a time-domain location of a slot where the first resource set is located to a time-domain location of a slot where the paging message is located. That is, the time-domain location of the slot where the first resource set is located, is determined by the time-domain location of the slot where PDCCH of the paging message is located, or, determined by an offset relative to the time-domain location of the slot where PDCCH of the paging message is located.

1-3: A time-domain location of a symbol where the first resource set is located is determined by a time-domain location of a target monitoring occasion (MO) of a paging occasion (PO) where the paging message is located, which can be expressed as F4(PO_MO_symbol ), or F5 (PO_slot, MO_symbol), or F6 (PF_SFN, PO_slot, MO_symbol), or, F7 (PO_MO_symbol, first resource set_symbol_offset), or F8 (PO_slot, MO_symbol, first resource set_symbol_offset), or F9(PF_SFN, PO_slot, MO_symbol, first resource set_symbol_offset); where, PF_SFN, PO_slot are the same as those in 1-1, 1-2. PO_MO_symbol represents a time-domain location of the target MO of a paging occasion (PO) of PDCCH where the paging message is located, which can be obtained by related art, for example, SIB signaling configuration, or the terminal obtains a time-domain location of a first valid target MO according to a time-domain location of a target slot of a PO where the PDCCH is located and configuration of a search space of the paging message. F4 represents a functional relationship between a time-domain location of a symbol where the first resource set is located and a time-domain location of a first valid MO of PO of PDCCH where the paging message is located. F5 represents a functional relationship between the time-domain location of the symbol where the first resource set is located and at least one variable of the time-domain location of the PO of the PDCCH where the paging message is located and the time-domain location of the first valid MO. F6 represents a functional relationship between the time-domain location of the symbol where the first resource set is located and at least one variable of time-domain locations of a radio frame, a slot and an MO of PDCCH where the paging message is located. F7 represents a functional relationship between the time-domain location of the symbol where the first resource set is located and at least one variable of the time-domain location of the first valid MO of PO of PDCCH where the paging message is located and an offset of the time-domain location of the symbol of the first resource set. F8 represents a functional relationship of a time-domain location of a symbol where the first resource set is locate and at least one variable of a time-domain location of a monitoring position PO of PDCCH where the paging message is located and a time-domain location of a first valid MO. F9 represents a functional relationship of a time-domain location of a symbol where the first resource set is locate and at least one variable of a time-domain location of a target radio frame PO_SFN of PDCCH where the paging message is located, a time-domain location of a target slot PO_slot, a time-domain location of MO of the target slot PO_slot and an offset of the time-domain location of the symbol of the first resource set.

The functional relationship F4, F5, and F6 may be expressed as Y=X, that is, the time-domain location of the symbol where the first resource set is located=the time-domain location of the first valid MO of the PO where the paging message is located, or, the time-domain location of the symbol where the first resource set is located=PO_slot*the number of symbols in each slot+PO_MO_symbol, or, the time-domain location of the symbol where the first resource set is located=PF_SFN*the number of subframes in each radio frame*the number of slots in each subframe*the number of symbols in each slot+ PO_MO_symbol. The functional relationship F7, F8, and F9 may be expressed as Y=X+offset, that is, the time-domain location of the symbol where the first resource set is located=PO_MO_symbol+first resource set_symbol_offset, or, second control resource set_symbol=PO_slot*the number of symbols in each slot+PO_MO_symbol+second control resource set_symbol_offset, or, the time-domain location of the symbol where the first resource set is located=PF_SFN*the number of subframes in each radio frame*the number of slots in each subframe*the number of symbols in each slot+ PO_MO_symbol+first resource set_symbol_offset; where the first resource set_symbol_offset represents a symbol offset between the symbol where the first resource set is located and the time-domain location of the first valid MO of monitoring occasions in PO of PDCCH where the paging message is located.

Further, the target beam of the first resource set may be associated with at least one of the following beams including: a beam of an SSB, or a beam of a MO of a paging message, or a beam of the first control resource set.

Further, the time-domain location of the target beam of the first resource set may be expressed as a function of the time-domain location of the target reference. The function of the time-domain location of the target reference may be an offset of the time-domain location of the target reference. An offset of the time-domain location of the target beam of the first resource set relative to the time-domain location of the target reference may be configured by signaling, for example, configured through SIB or MIB signaling; or may be determined by the time-domain location of the target reference plus duration, where the duration may be duration of each beam of the first resource set, or may be duration of the monitoring occasion MO of the paging message.

Specifically, a calculation method is described hereinafter.

2-1: the time-domain location of the target beam of the first resource set may be expressed as a function of a time-domain location of a radio frame where the first resource set is located, i.e., F13(first resource set_SFN, first resource set_beam_i_offset), where the first resource set_SFN represents a time-domain location of the radio frame where the first resource set is located, and the first resource set_beam_i_offset represents an offset of a time-domain location of an i-th beam of the reference signal.

The functional relationship F13 may be expressed as Y3=X3+offset3, that is, first resource set_beam_i=second control resource set_SFN*the number of subframes of each radio frame*the number of each subframe* the number of slots of each subframe*the number of symbols in each slot+ first resource set _beam_i_offset. The first resource set_SFN is the same as above; the first resource set_beam_i_offset is the same as above, that is, the time-domain location of the i-th beam of the first resource set is jointly determined by the radio frame where the first resource set is located and an offset3 of the i-th beam in the first resource set.

2-2: the time-domain location of the target beam of the first resource set may be expressed as a function of the time-domain location of the subframe or slot of the first resource set, i.e., F14(first resource set_slot, first resource set_beam_i_offset), where the first resource set_slot represents the time-domain location of the subframe or slot where the first resource set is located, and the first resource set_beam_i_offset represents an offset of a time-domain location of an i-th beam of the first resource set.

The functional relationship F14 may be expressed as Y4=X4+offset4, that is, first resource set_beam_i=first resource set_slot*the number of slots in each subframe*the number of symbols in each slot+first resource set_beam_i_offset, or first resource set_beam_i=first resource set_slot*the number of symbols in each slot+first resource set_beam_i_offset. The first resource set_beam_i_offset is the same as above, that is, the time-domain location (first resource set_beam_i) of the i-th beam of the first resource set is jointly determined by a location of the radio frame where the first resource set is located and an offset of the i-th beam of the first resource set.

Further, the offset of the time-domain location of the i-th beam of the first resource set is the same as that in 2-1.

2-3: the time-domain location of the target beam of the first resource set may be expressed as a function of a time-domain location of a target radio frame of a paging message, i.e., F15(PF_SFN, first resource set_beam_i_offset), that is, the time-domain location of the target beam of the first resource set is determined by the time-domain location of the target radio frame where PDCCH of the paging message is located and an offset of the time-domain location of the beam of the first resource set. PF_SFN mayrepresent the time-domain location of the target radio frame.

The functional relationship F15 may be expressed as Y5=X5+offset5, that is, first resource set_beam_i=PF_SFN*the number of subframes in each radio frame*the number of slots in each subframe*the number of symbols in each slot+first resource set_beam_i_offset. The first resource set_beam_i_offset is the same as above.

Further, the offset of the time-domain location of the i-th beam of the first resource set is the same as that in 2-1.

2-4: the time-domain location of the target beam of the first resource set may be expressed as a function of a time-domain location of a target monitoring subframe or slot PO of the paging message, i.e., F16(PO_slot, first resource set_beam_i_offset), that is, the time-domain location of the target beam of the first resource set is determined by a time-domain location of the target monitoring subframe or slot where PDCCH of the paging message is located, and the offset of the time-domain location of the beam of the first resource set.

The functional relationship F16 may be expressed as Y6=X6+offset6, that is, first resource set_beam_i=PO_slot*the number of slots in each subframe*the number of symbols in each slot+first resource set_beam_i_offset, or first resource set_beam_i= PO_slot*the number of symbols in each slot+first resource set_beam_i_offset. The first resource set _beam_i_offset is the same as above.

Further, the offset (first resource set_beam_i) of the time-domain location of the i-th beam of the first resource set is the same as that in 2-1.

2-5: the target beam of the first resource set is associated with the beam of the target monitoring occasion MO where PDCCH of the paging message is located. A time-domain location of the target beam of the first resource set may be determined by a time-domain location of an index of beam of the target monitoring occasion MO where PDCCH is located, with a functional relationship expressed as F17(PO_MO, first resource set_beam_i_offset), where PO_MO may represent a time-domain location of a first valid monitoring occasion MO of a target PO, or represent a time-domain location of an i-th valid monitoring occasion MO of a target PO.

The functional relationship F17 may be expressed as Y7=X7+offset7, that is, first resource set_beam_i=PO_MO+first resource set_beam_i_offset, where a time-domain location of PO_MO may be obtained by related art, and the first resource set_beam_i_offset is the same as above, that is, a time-domain location of an i-th beam of the first resource set is jointly determined by the time-domain location of the monitoring occasion MO of the target PO and an offset7 of an i-th beam of of the first resource set.

Further, an offset (first resource set_beam_i_offset) of the time-domain location of the i-th beam of the first resource set is the same as that in 2-1.

2-6: a time-domain location of a target beam of the first resource set may be determined according to a parameter of a time-domain location of a target radio frame of a paging message, that is, the time-domain location of the target beam in the first resource set is determined by the parameter of the time-domain location of the target radio frame where PDCCH of the paging message is located and an offset of the time-domain location of the beam of the first resource set, with a functional relationship expressed as F18(T, N, SFN, PF_offset, ID, first resource set_SFN_offset, first resource set_beam_i_offset), where T represents a paging cycle, N represents the number of PFs in a paging cycle, ID is UE_ID, UE_ID is S-TMSI mod 1024, and descriptions of other parameters are the same as above.

The functional relationship F18 may be expressed as, (first resource set_SFN+first resource set_SFN_offset) mod T=(T div N)*(ID mod N), first resource set_beam_i=SFN*the number of subframes in each radio frame*the number of slots in each subframe*the number of symbols in each slot+first resource set_beam_i_offset. Descriptions of parameters is the same as above.

Further, an offset of the time-domain location of the i-th beam of the first resource set is the same as that in 2-1.

2-7: a time-domain location of a target beam of the first resource set may be expressed as a function of a parameter of a time-domain position of a target monitoring subframe or slot PO of a paging message, i.e., F19(N, Ns, ID, first resource set _beam_i_offset). That is, the time-domain location of the target beam of the first resource set is determined by the parameter of the time-domain location of the target monitoring subframe or slot where PDCCH of the paging message is located, and an offset of the time-domain location of the beam of the first resource set.

The functional relationship F19 may be expressed as, first resource set_i_s=floor(ID/N) mod Ns+first resource set_beam_i_offset, that is, first resource set_beam_i=first resource set_slot*the number of slots in each subframe*the number of symbols in each slot+first resource set _beam_i_offset, or first resource set _beam_i=PO_slot*the number of symbols in each slot+first resource set_beam_i_offset. N represents the number of PFs in a paging cycle , ID is UE_ID, UE_ID is S-TMSI mod 1024, Ns represents the number of POs associated with a PF, and i_s is a logical serial index of PO after it belongs to PF.

In the embodiment of the present disclosure, a location of MO of a first PDCCH monitored in PO may be configured by signaling, or may also be determined by monitoring a location of a first valid MO via the terminal based on configuration of a search space and then determining according to a fixed rule index.

Further, an offset of the time-domain location of the i-th beam of the first resource set is the same as that in 2-1.

Further, the time-domain location of the reference signal may be at least one of a start time-domain location of the reference signal, an end time-domain location of the reference signal, or duration of the reference signal. A frequency-domain location of the reference signal may be a start frequency-domain location of the reference signal, an end frequency-domain location of the reference signal, or at least one of multiple resource units in the frequency-domain of the reference signal.

Further, the time-domain location of the reference resource may be at least one of a start time-domain location of the reference resource, an end time-domain location of the reference resource, or duration of the reference resource. The frequency-domain location of the reference resource may be a start frequency-domain location of the reference resource, an end frequency-domain location of the reference resource, or at least one of multiple resource units in the frequency-domain of the reference resource.

At step 2, the base station transmits the PEI on the first control resource set zero or the first common control resource set.

Optionally, the base station transmits control information such as downlink control information (DCI) on the first control resource set zero or the first common control resource set, and the control information carries PEI.

At step 3, the base station transmits a paging message on the second control resource set zero or the second common control resource set.

### Example 2

At step 1, a base station configures a first search space set zero and a second search space set zero, or configures a dedicated PEI search space set, or configures a search space set for carrying PEI to be multiplexed with an existing search space set.

Specifically, the first search space set zero and the second search space set zero are configured, the second search space set zero is used to carry resource information of the first search space set zero, and the first search space set zero is used to carry transmitting and receiving information of PEI;
or, at least one first common search space set and a second common search space set are configured, the second common search space set is used to carry resource information of existing common search space sets, and the first common search space set is used to carry transmitting and receiving information of PEI;
or, the first search space set for carrying PEI information may also multiplex resource information of an existing search space set;
or, the first search space set may also be a dedicated subset based on an existing search space set. The existing search space set may be at least one of the following, including: a paging search space set, or a random access search space set, or a search space set zero, or a SIB1 search space set, or other system message search space sets.

The first search space set zero is used to carry transmitting and receiving information of PEI; a time-domain parameter of the first search space set zero may be at least one of the following: a time-domain location of a radio frame of a search space set, a time-domain location of a subframe, a time-domain location of a slot, a slot location of a symbol, a monitoring period in time-domain of a search space, a time-domain offset of monitoring occasion of a search space, duration of monitoring signal of a search space, monitoring symbol pattern per slot; and/or, a time-domain offset of at least one of the above items relative to a reference resource and/or a reference signal. The reference signal may be at least one of the following reference signals: synchronization signal, channel time-frequency tracking signal TRS, CSI-RS, paging message signal. The reference resource may be the second search space set zero used to carry existing information, and/or the second common search space set used to carry resource information of an existing search space set.

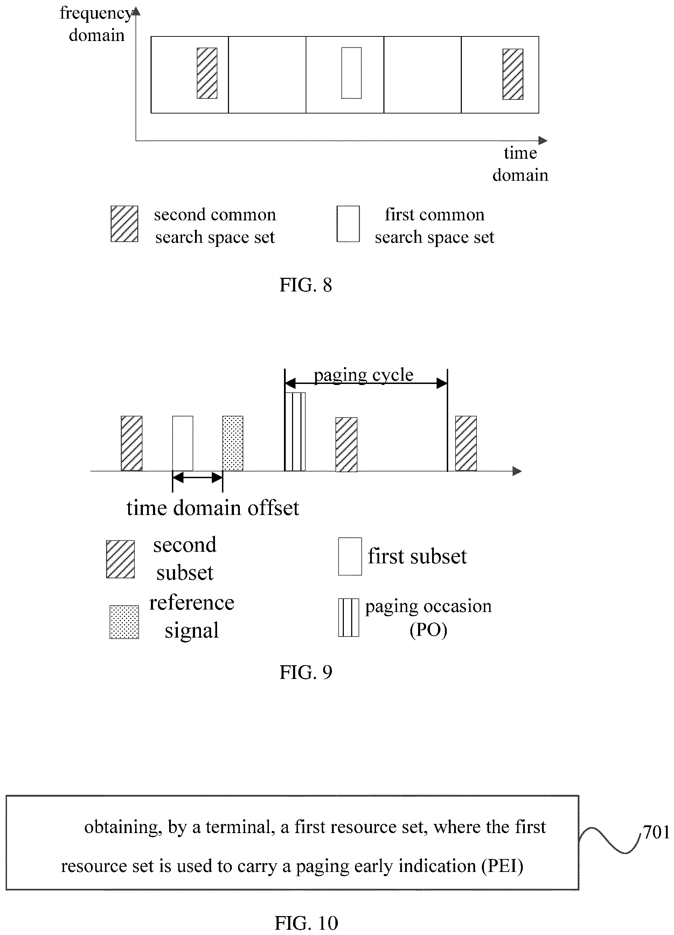

It is assumed that two common search space sets are configured, including a first common search space set and a second common search space set; where the second common search space set is used to carry existing information, and the first common search space set is specially used to carry transmitting and receiving information of PEI. The first common search space set and the second common search space set may be multiplexed in the time-domain. Or, as shown in FIG. 7, the first common search space is configured as a c-th symbol of a slot A, and the second common search space is configured as a d-th symbol of the slot A. Or, as shown in FIG. 8, time-domain locations of the first common search space set and the second common search space set are different, but frequency-domain locations of the first common search space set and the second common search space set are the same, or, time-domain locations and frequency-domain locations of the first common search space set and the second common search space set may be different; or, the second common search space set includes the first common search space set, that is, the first common search space set is a subset of the second common search space set.

The above configuration may be one of the following two ways, including:
the base station configures parameters through a MIB or SIB;
the base station and the terminal obtain configured parameters in an agreed manner, where the agreed manner may be based on at least one of the following reference signals/reference resources, including: paging message, synchronization signal, TRS signal, and CSI-RS signal. Configuring the time-domain location of the second search space set, includes configuring, for example, a time-domain location of a corresponding radio frame, a time-domain location of a subframe, a time-domain location of a slot, and a time-domain location of a symbol. The second search space set may be a second search space set zero, and/or a second common search space set.

Configuring the time-domain location of the first search resource set specifically includes configuring at least one of the following: a time-domain location of a radio frame, or a time-domain location of a subframe, or a time-domain location of a slot, or a slot location of a symbol, or, an offset relative to a time-domain location of a reference signal. Configuring the time-domain location of the first search resource set may further include configuring at least one of the following: a time-domain offset of a radio frame, or a time-domain offset of a subframe, or a time-domain offset of a slot, or a time-domain offset of a symbol. For example, the time-domain location of the radio frame of the reference signal is a radio frame X, then the time-domain location of the radio frame of the first search space set may be the time-domain location X of the radio frame of the reference signal+the time-domain offset of the radio frame.

In case that the reference signal is a paging signal, the offset of the time-domain location of the first search resource set may further be a monitoring occasion PO of the paging signal, or a monitoring occasion MO of the paging signal, or, a time-domain location of a monitoring occasion where different beam directions of the paging signal are located;
In case that the reference signal is a synchronization signal, the time-domain location of the first search resource set may be a time-domain location where different beams of the synchronization signal are located;
In case that the reference signal is TRS and CSI-RS signal, the time-domain location of the first search resource set may be a time-domain location where different beams of the TRS or CSI-RS are located.

By taking the reference signal being a paging message as an example, the time-domain location of the first resource set may be determined according to the time-domain location of the reference signal. An instance of using the time-domain location of the paging message to determine the time-domain location of the first resource set, is specifically the same as in Example 1.

Further, the time-domain location of the reference signal may be at least one of a start time-domain location of the reference signal, an end time-domain location of the reference signal, or duration of the reference signal. A frequency-domain location of the reference signal may be a start frequency-domain location of the reference signal, an end frequency-domain location of the reference signal, or at least one of multiple resource units in the frequency-domain of the reference signal.

Further, the time-domain location of the reference resource may be at least one of a start time-domain location of the reference resource, an end time-domain location of the reference resource, or duration of the reference resource. The frequency-domain location of the reference resource may be a start frequency-domain location of the reference resource, an end frequency-domain location of the reference resource, or at least one of multiple resource units in the frequency-domain of the reference resource.

At step 2, the base station transmits the PEI on a search space set used to carry the PEI.

At step 3, the base station transmits a paging message.

The base station transmits the paging message on the second search space set zero and/or the second common search space set configured by the base station.

### Example 3

At step 1, a base station configures a first subset and a second subset of a control resource set zero, or configures a first subset and a second subset of a common control resource set.

Specifically, two sets of parameter sets including a first parameter set and a second parameter set, are configured for the control resource set zero. A resource corresponding to the second parameter set is used to carry first information, and the first parameter set zero is used to carry transmitting and receiving information of PEI. The above first information is resource information of an existing control resource set; or,
the base station configures two sets of parameter sets of the common control resource set, including a first parameter set and a second parameter set. A resource corresponding to the second parameter set is used to carry first information, and a resource corresponding to the first parameter set is used to carry transmitting and receiving information of PEI.

The resource corresponding to the second parameter set includes at least one of the following: a time-domain location, or a frequency-domain location. The time-domain location may be at least one of the following: a time-domain location of a radio frame, a time-domain location of a subframe, a time-domain location of a slot, a time-domain location of a symbol; and/or, a time-domain offset of at least one of the above items relative to a reference resource and/or signal. The frequency-domain location of the first parameter set may be configured with at least one of the following: a resource block group of frequency-domain resources, a resource block, a resource unit group, and a frequency-domain location of a resource unit; and/or, a frequency-domain offset of at least one of the above items relative to reference resource and/or signal. The reference signal may be at least one of the following reference signals: synchronization signal, channel time-frequency tracking signal TRS, CSI-RS signal, paging message signal. The reference resource may be a resource configured for the second parameter set of the control resource set.

The above configuration may be one of the following two ways, including:
the base station configures parameters through a MIB or SIB;
the base station and the terminal obtain configured parameters in an agreed manner, where the agreed manner may be based on at least one of the following reference signals/reference resources, including: paging message, synchronization signal, TRS signal, and CSI-RS signal. Configuring the time-domain location of the second subset, includes configuring, for example, a time-domain location of a corresponding radio frame, a time-domain location of a subframe, a time-domain location of a slot, and a time-domain location of a symbol.

An offset of a time-domain location of a symbol corresponding to the second parameter set relative to the time-domain location of the reference signal is a first time-domain offset; an offset of a time-domain location of a symbol corresponding to the first parameter set relative to the time-domain location of the reference signal is a second time-domain offset. For example, an offset of the time-domain location of the second parameter set is symbol i, and an offset of the time-domain location of the first parameter set is symbol x; or,
the time-domain location of the symbol of the second parameter set is configured as a first time-domain location, and the time-domain location of the symbol of the first parameter set is a time-domain offset relative to the first time-domain location.

An offset of the frequency-domain location of the second parameter set relative to the frequency-domain location of the reference signal is a first frequency-domain offset, and an offset of the frequency-domain location of the first parameter set relative to the frequency-domain location of the reference signal is a second frequency-domain offset. For example, a frequency-domain location offset of the second parameter set is resource block k, and a frequency-domain location offset of the first resource set is resource block s; or,
the frequency-domain location of the second parameter set is configured as a first frequency-domain location, and the time-domain location of the symbols of the first parameter set is a first frequency-domain offset relative to the first frequency-domain location.

As shown in FIG. 9, configuration of the time-domain location of the first subset corresponding to the first parameter set is based on a time-domain offset relative to the reference signal.

By taking the reference signal being a paging message as an example, the time-domain location of the first subset may be determined according to the time-domain location of the reference signal. An instance of using the target time-domain location of the paging message to determine the time-domain location of the first subset, is specifically the same as in Example 1.

Further, the time-domain location of the reference signal may be at least one of a start time-domain location of the reference signal, an end time-domain location of the reference signal, or duration of the reference signal. A frequency-domain location of the reference signal may be a start frequency-domain location of the reference signal, an end frequency-domain location of the reference signal, or at least one of multiple resource units in the frequency-domain of the reference signal.

Further, the time-domain location of the reference resource may be at least one of a start time-domain location of the reference resource, an end time-domain location of the reference resource, or duration of the reference resource. The frequency-domain location of the reference resource may be a start frequency-domain location of the reference resource, an end frequency-domain location of the reference resource, or at least one of multiple resource units in the frequency-domain of the reference resource.

At step 2, the base station transmits the PEI on a resource used to carry the PEI.

At step 3, the base station transmits a paging message.

The base station transmits the paging message on a resource corresponding to the second subset configured by the base station.

### Example 4

At step 1, a base station configures a first subset and a second subset of a search space zero, or configures a first subset and a second subset of a common search space.

Specifically, the base station configures a second parameter set and at least one first parameter set of a search space set zero; the second parameter set is used to carry existing information, and at least one first parameter set zero is used to carry transmitting and receiving information of PEI.

The base station configures a second parameter set and at least one first parameter set of the common search space set; a resource corresponding to the second parameter set is used to carry existing information, and a resource corresponding to at least one first parameter set is used to carry transmitting and receiving information of PEI.

The at least one first parameter set is used to carry transmitting and receiving information of PEI; the first parameter set includes a time-domain parameter, and the time-domain parameter may be at least one of the following: a time-domain location of a radio frame of a search space set, a time-domain location of a subframe, a time-domain location of a slot, a slot location of a symbol, a time-domain monitoring cycle of a search space, a time-domain offset of monitoring occasion of a search space, duration of a search space monitoring signal, a monitoring symbol pattern of each slot; and/or a time-domain offset of at least one of the above items relative to a reference resource and/or a reference signal. The reference signal may be at least one of the following reference signals, including: a synchronization signal, channel time-frequency tracking signal TRS, CSI-RS signal, and a paging message signal. The reference resource may be the second search space set zero used to carry existing information, and/or an existing common search space set used to carry an existing search space set.

The above configuration may be one of the following two ways, including:
the base station configures parameters through a MIB or SIB;
the base station and the terminal obtain configured parameters in an agreed manner, where the agreed manner may be based on at least one of the following reference signals/reference resources, including: paging message, synchronization signal, TRS signal, and CSI-RS signal. Configuring the time-domain location of the second subset, includes configuring, for example, a time-domain location of a corresponding radio frame, a time-domain location of a subframe, a time-domain location of a slot, and a time-domain location of a symbol.

The time-domain location of the first parameter set includes at least one of the following: a time-domain location of a radio frame, or a time-domain location of a subframe, or a time-domain location of a slot, or a slot location of a symbol, an offset relative to a time-domain location of a reference signal. The time-domain location of the first parameter set further includes at least one of the following: a time-domain offset of a radio frame, or a time-domain offset of a subframe, or a time-domain offset of a slot, or a time-domain offset of a symbol. For example, the time-domain location of the radio frame of the reference signal is a radio frame X, then the time-domain location of the radio frame of the first parameter set may be the time-domain location X of the radio frame of the reference signal+the time-domain offset of the radio frame.

In case that the reference signal is a paging signal, the offset of the time-domain location of the first parameter set may further be a monitoring occasion PO of the paging signal, or a monitoring occasion MO of the paging signal, or, a time-domain location of a monitoring occasion where different beam directions of the paging signal are located;
In case that the reference signal is a synchronization signal, the offset of the time-domain location of the first parameter set may be a time-domain location where different beams of the synchronization signal are located;
In case that the reference signal is TRS and CSI-RS signal, the time-domain location of the first parameter set may be a time-domain location where different beams of the TRS or CSI-RS are located.

By taking the reference signal being a paging message as an example, the time-domain location of the first subset may be determined according to the time-domain location of the reference signal. An instance of using the yarget time-domain location of the paging message to determine the time-domain location of the first subset, is specifically the same as in Example 1.

Further, the time-domain location of the reference signal may be at least one of a start time-domain location of the reference signal, an end time-domain location of the reference signal, or duration of the reference signal.

A frequency-domain location of the reference signal may be a start frequency-domain location of the reference signal, an end frequency-domain location of the reference signal, or at least one of multiple resource units in the frequency-domain of the reference signal.

At step 2, the base station transmits the PEI on a resource used to carry the PEI.

The base station transmits control information on a resource corresponding to the first parameter set configured by the base station, and the control information carries PEI information.

At step 3, optionally, the base station transmits a paging message.

The base station transmits the paging message based on the resource corresponding to the configured second parameter set.

In the embodiment of the present disclosure, the first resource set used to carry PEI is configured, so that transmitting and receiving of paging messages can be indicated based on the PEI, thereby avoiding invalid monitoring of paging PDCCHs by the terminal and then reducing the power consumption of the terminal.

As shown in FIG. 10, one embodiment of the present disclosure further provides a resource obtaining method, which includes:

Step 701: obtaining, by a terminal, a first resource set, where the first resource set is used to carry a paging early indication (PEI).

The first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

Optionally, the resource obtaining method in the embodiment of the present disclosure further includes:
receiving the PEI according to the first resource set.

Optionally, the resource obtaining method in the embodiment of the present disclosure further includes:
obtaining a second resource set.

Optionally, the resource obtaining method in the embodiment of the present disclosure further includes:
receiving a paging message according to the second resource set.

Optionally, the obtaining the first resource set, includes:
obtaining the first resource set according to a master information block (MIB) or system information block (SIB); or,
obtaining the first resource set according to reference information;
where the reference information includes at least one of the following:
   resource information of a reference signal; or,
   resource information of a reference resource; or,
   a parameter for determining resource information of a reference signal; or,
   a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, where the second resource set is a resource set for transmitting a paging message.

Optionally, the obtaining the first resource set according to the reference information, includes:
configuring at least one of time-domain location information and frequency-domain location information of the first resource set, by using a preset mapping function, according to the reference information;
where the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
where the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following:
a first mapping function, a second mapping function, or a third mapping function;
where the first mapping function is used to indicate a mapping relationship between a radio frame corresponding to the reference information and a radio frame of the first resource set;
where the second mapping function is used to indicate a mapping relationship between a slot of the first resource set and at least one of a radio frame, a subframe and a slot corresponding to the reference information;
where the third mapping function is used to indicate a mapping relationship between a symbol of the first resource set and at least one of a radio frame, a subframe, a slot and a symbol corresponding to the reference information.

Optionally, the obtaining the time-domain resource of the first resource set by using the preset mapping function according to the reference information, includes:
according to association relationship between beam information of the reference information and beam information of the first resource set, obtaining a time-domain resource of a beam of the first resource set by using the preset mapping function.

Optionally, the preset mapping function includes at least one of the following:
a fourth mapping function, a fifth mapping function, a sixth mapping function, a seventh mapping function and/or an eighth mapping function.

The fourth mapping function is used to indicate a mapping relationship between a radio frame corresponding to a beam of the reference information and a radio frame of a beam of the first resource set.

The fifth mapping function is used to indicate a mapping relationship between a slot of a beam of the first resource set and at least one of a slot and subframe corresponding to a beam of the reference information.

The sixth mapping function is used to indicate a mapping relationship between a first time-domain location corresponding to a beam of the reference information and a time-domain location of a beam of the first resource set. The first time-domain location is a time-domain location of an i-th valid monitoring opportunity corresponding to the reference information, where i is greater than or equal to 1.

The seventh mapping function is used to indicate a mapping relationship between a first parameter and a radio frame of a beam of the first resource set. The first parameter is a parameter for determining a radio frame corresponding to a beam of a reference signal or a reference resource.

The eighth mapping function is used to indicate a mapping relationship between a second parameter and a slot of a beam of the first resource set. The second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set.

The third resource set includes at least one of the following:
a paging search space set; or,
a random access search space set; or,
a search space set zero; or,
a system message search space set.

It should be noted that the resource obtaining method in the embodiment of the present disclosure is a method corresponding to the above resource configuring method, and will not be described in detail here.

In the embodiment of the present disclosure, the first resource set used to carry PEI is configured, so that transmitting and receiving of paging messages can be indicated based on the PEI, thereby avoiding invalid monitoring of paging PDCCHs by the terminal and then reducing the power consumption of the terminal.

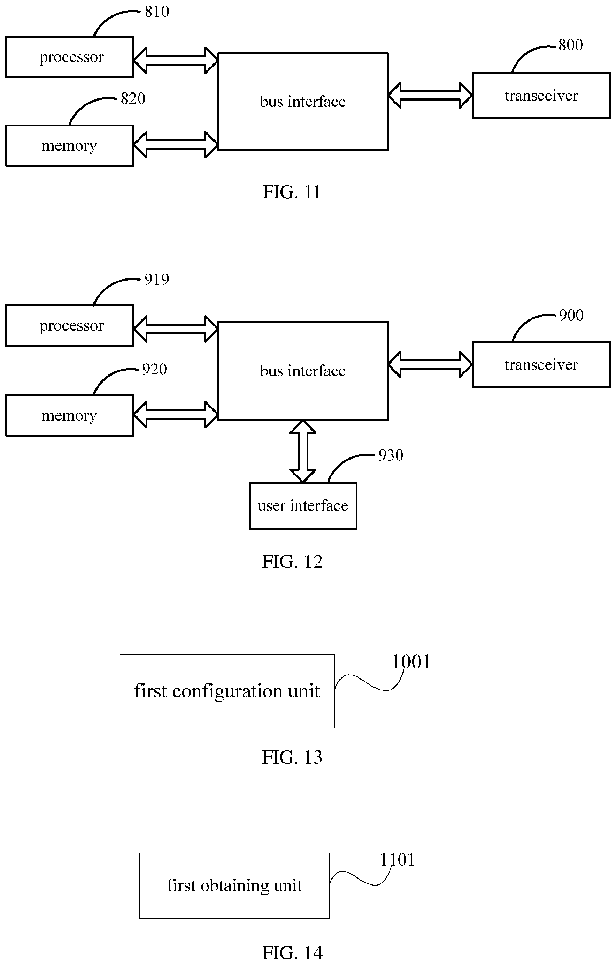

As shown in FIG. 11, one embodiment of the present disclosure further provides a resource configuring device, which is applied to a network device such as a base station, and includes a memory 820, a transceiver 800 and a processor 810.

The memory 820 is used to store a computer program. The transceiver 800 is used to transmit and receive data under the control of the processor 810. The processor 810 is used to read the computer program in the memory 820 and perform the following operations:
configuring a first resource set, where the first resource set is used to carry a paging early indication (PEI).

The first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

In FIG. 11, a bus architecture may include any number of interconnected bus and bridge. Specifically, various circuits of one or more processors, which are represented by the processor 810, and one or more memories, which are represented by the memory 820, are linked together. The bus architecture may link various other circuits, such as a peripheral device, voltage regulator and a power management circuit together. These features are well known in this field; therefore, this disclosure does not make further description on these features. The bus interface provides an interface. The transceiver 800 may be multiple elements, including a transmitter and a receiver and provide units, which communicate with other devices on the transmission medium. The transmission medium includes wireless channels, wired channels, and optical cables. The processor 810 is responsible for managing the bus architecture and the normal processing. The memory 820 may be used to store data used by the processor 810 for performing operations.

The processor 810 may be a central processing unit (CPU), an application specific integrated circuit (ASIC), a field-programmable gate array (FPGA) or a complex programmable logic device (CPLD). The processor may also adopt multi-core architecture.

Optionally, the transceiver 800 is configured to transmit the PEI according to the first resource set.

Optionally, the processor 810 is further configured to configure a second resource set.

Optionally, the transceiver 800 is further configured to transmit a paging message according to the second resource set.

Optionally, the processor 810 is further configured to,
according to a master information block (MIB, according to an agreement) or system information block (SIB), configure the first resource set;
   or,
according to reference information, configure the first resource set.

The reference information includes at least one of the following:
resource information of a reference signal; or,
resource information of a reference resource; or,
a parameter for determining resource information of a reference signal; or,
a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, where the second resource set is a resource set for transmitting a paging message.

Optionally, the processor 810 is further configured to,
configure at least one of time-domain location information and frequency-domain location information of the first resource set, by using a preset mapping function, according to the reference information;
where the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
where the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following:
a first mapping function, a second mapping function, or a third mapping function;
where the first mapping function is used to indicate a mapping relationship between a radio frame corresponding to the reference information and a radio frame of the first resource set;
where the second mapping function is used to indicate a mapping relationship between a slot of the first resource set and at least one of a radio frame, a subframe and a slot corresponding to the reference information;
where the third mapping function is used to indicate a mapping relationship between a symbol of the first resource set and at least one of a radio frame, a subframe, a slot and a symbol corresponding to the reference information.

Optionally, the processor 810 is further configured to,
according to association relationship between beam information of the reference information and beam information of the first resource set, configure a time-domain resource of a beam of the first resource set by using the preset mapping function.

Optionally, the preset mapping function includes at least one of the following:
a fourth mapping function, a fifth mapping function, a sixth mapping function, a seventh mapping function and/or an eighth mapping function.

The fourth mapping function is used to indicate a mapping relationship between a radio frame corresponding to a beam of the reference information and a radio frame of a beam of the first resource set.

The fifth mapping function is used to indicate a mapping relationship between a slot of a beam of the first resource set and at least one of a slot and subframe corresponding to a beam of the reference information.

The sixth mapping function is used to indicate a mapping relationship between a first time-domain location corresponding to a beam of the reference information and a time-domain location of a beam of the first resource set. The first time-domain location is a time-domain location of an i-th valid monitoring opportunity corresponding to the reference information, where i is greater than or equal to 1.

The seventh mapping function is used to indicate a mapping relationship between a first parameter and a radio frame of a beam of the first resource set. The first parameter is a parameter for determining a radio frame corresponding to a beam of a reference signal or a reference resource.

The eighth mapping function is used to indicate a mapping relationship between a second parameter and a slot of a beam of the first resource set. The second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set.

The third resource set includes at least one of the following:
a paging search space set; or,
a random access search space set; or,
a search space set zero; or,
a system message search space set.

It is to be noted here that the foregoing device provided in the embodiments of the present disclosure can implement all steps implemented by the foregoing resource configuring method embodiments, and can achieve the same technical effect. Parts and beneficial effects in this embodiment that are the same as those in the method embodiment will not be described in detail here.

As shown in FIG. 12, one embodiment of the present disclosure further provides a resource obtaining device, which is applied to a terminal, and includes a memory 920, a transceiver 900 and a processor 910.

The memory 920 is used to store a computer program. The transceiver 900 is used to transmit and receive data under the control of the processor 910. The processor 910 is used to read the computer program in the memory 920 and perform the following operations:
obtaining, by the transceiver, a first resource set, where the first resource set is used to carry a paging early indication (PEI).

The first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

In FIG. 12, a bus architecture may include any number of interconnected bus and bridge. Specifically, various circuits of one or more processors, which are represented by the processor 910, and one or more memories, which are represented by the memory 920, are linked together. The bus architecture may link various other circuits, such as a peripheral device, voltage regulator and a power management circuit together. These features are well known in this field; therefore, this disclosure does not make further description on these features. The bus interface provides an interface. The transceiver 900 may be multiple elements, including a transmitter and a receiver and provide units, which communicate with other devices on the transmission medium. The transmission medium includes wireless channels, wired channels, and optical cables. For different terminals, a user interface 930 may also be an interface capable of externally connecting required devices, and the connected devices include but are not limited to keypads, displays, speakers, microphones, joysticks, etc.

The processor 910 is responsible for managing the bus architecture and the normal processing. The memory 920 may be used to store data used by the processor 910 for performing operations.

Optionally, the processor 910 may be a central processing unit (CPU), an application specific integrated circuit (ASIC), a field-programmable gate array (FPGA) or a complex programmable logic device (CPLD). The processor may also adopt multi-core architecture.

The processor is used to call the computer program stored in the memory, and execute any method provided in the embodiments of the present disclosure according to obtained executable instructions. The processor and the memory may also be physically separated.

Optionally, the transceiver 900 is further configured to receive the PEI according to the first resource set.

Optionally, the transceiver 900 is further configured to obtain a second resource set.

Optionally, the transceiver 900 is further configured to receive a paging message according to the second resource set.

Optionally, the processor 910 is further configured to,
obtain the first resource set according to a master information block (MIB) or system information block (SIB); or,
obtain the first resource set according to reference information;
where the reference information includes at least one of the following:
   resource information of a reference signal; or,
   resource information of a reference resource; or,
   a parameter for determining resource information of a reference signal; or,
   a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

Optionally, the reference resource includes: a second resource set, where the second resource set is a resource set for transmitting a paging message.

Optionally, the processor 910 is further configured to,
configure at least one of time-domain location information and frequency-domain location information of the first resource set, by using a preset mapping function, according to the reference information;
where the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
where the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

Optionally, the preset mapping function includes at least one of the following:
a first mapping function, a second mapping function, or a third mapping function;
where the first mapping function is used to indicate a mapping relationship between a radio frame corresponding to the reference information and a radio frame of the first resource set;
where the second mapping function is used to indicate a mapping relationship between a slot of the first resource set and at least one of a radio frame, a subframe and a slot corresponding to the reference information;
where the third mapping function is used to indicate a mapping relationship between a symbol of the first resource set and at least one of a radio frame, a subframe, a slot and a symbol corresponding to the reference information.

Optionally, the processor 910 is further configured to,
according to association relationship between beam information of the reference information and beam information of the first resource set, obtain a time-domain resource of a beam of the first resource set by using the preset mapping function.

Optionally, the preset mapping function includes at least one of the following:
a fourth mapping function, a fifth mapping function, a sixth mapping function, a seventh mapping function and/or an eighth mapping function.

The fourth mapping function is used to indicate a mapping relationship between a radio frame corresponding to a beam of the reference information and a radio frame of a beam of the first resource set.

The fifth mapping function is used to indicate a mapping relationship between a slot of a beam of the first resource set and at least one of a slot and subframe corresponding to a beam of the reference information.

The sixth mapping function is used to indicate a mapping relationship between a first time-domain location corresponding to a beam of the reference information and a time-domain location of a beam of the first resource set. The first time-domain location is a time-domain location of an i-th valid monitoring opportunity corresponding to the reference information, where i is greater than or equal to 1.

The seventh mapping function is used to indicate a mapping relationship between a first parameter and a radio frame of a beam of the first resource set. The first parameter is a parameter for determining a radio frame corresponding to a beam of a reference signal or a reference resource.

The eighth mapping function is used to indicate a mapping relationship between a second parameter and a slot of a beam of the first resource set. The second parameter is a parameter for determining at least one of a slot or subframe corresponding to a beam of a reference signal or a reference resource.

Optionally, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

Optionally, the first resource set overlaps with a third resource set, or, the first resource set is a subset of the third resource set.

The third resource set includes at least one of the following:
a paging search space set; or,
a random access search space set; or,
a search space set zero; or,
a system message search space set.

It is to be noted here that the foregoing device provided in the embodiments of the present disclosure can implement all steps implemented by the foregoing resource obtaining method embodiments, and can achieve the same technical effect. Parts and beneficial effects in this embodiment that are the same as those in the method embodiment will not be described in detail here.

As shown in FIG. 13, one embodiment of the present disclosure further provides a resource configuring device, which is applied to a network device, and includes:
a first configuration unit 1001 configured to configure a first resource set, where the first resource set is used to carry a paging early indication (PEI).

The first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

The resource configuring device in the embodiment of the present disclosure further includes: a first transmission unit configured to transmit the PEI according to the first resource set.

The resource configuring device in the embodiment of the present disclosure further includes: a second configuration unit configured to configure a second resource set.

The resource configuring device in the embodiment of the present disclosure further includes: a second transmission unit configured to transmit a paging message according to the second resource set.

According to the resource configuring device in the embodiment of the present disclosure, the first configuration unit is configured to,
configure the first resource set according to a master information block (MIB) or a system information block (SIB);
or, configure the first resource set according to reference information.

The reference information includes at least one of the following:
resource information of a reference signal; or,
resource information of a reference resource; or,
a parameter for determining resource information of a reference signal; or,
a parameter for determining resource information of a reference resource.

Optionally, the reference signal includes at least one of the following:
a paging message; or,
a synchronization signal; or,
a tracking reference signal (TRS); or,
a channel state information-reference signal (CSI-RS).

According to the resource configuring device in the embodiment of the present disclosure, the reference resource includes: a second resource set, where the second resource set is a resource set for transmitting a paging message.

According to the resource configuring device in the embodiment of the present disclosure, the first configuration unit is configured to configure at least one of time-domain location information and frequency-domain location information of the first resource set, by using a preset mapping function, according to the reference information;
where the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
where the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

According to the resource configuring device in the embodiment of the present disclosure, the preset mapping function includes at least one of the following:
a first mapping function, a second mapping function, or a third mapping function;
where the first mapping function is used to indicate a mapping relationship between a radio frame corresponding to the reference information and a radio frame of the first resource set;
where the second mapping function is used to indicate a mapping relationship between a slot of the first resource set and at least one of a radio frame, a subframe and a slot corresponding to the reference information;
where the third mapping function is used to indicate a mapping relationship between a symbol of the first resource set and at least one of a radio frame, a subframe, a slot and a symbol corresponding to the reference information.

According to the resource configuring device in the embodiment of the present disclosure, the first configuration unit is configured to, according to association relationship between beam information of the reference information and beam information of the first resource set, configure a time-domain resource of a beam of the first resource set by using the preset mapping function.

According to the resource configuring device in the embodiment of the present disclosure, the preset mapping function includes at least one of the following:
a fourth mapping function, a fifth mapping function, a sixth mapping function, a seventh mapping function and/or an eighth mapping function.

The fourth mapping function is used to indicate a mapping relationship between a radio frame corresponding to a beam of the reference information and a radio frame of a beam of the first resource set.

The fifth mapping function is used to indicate a mapping relationship between a slot of a beam of the first resource set and at least one of a slot and subframe corresponding to a beam of the reference information.

The sixth mapping function is used to indicate a mapping relationship between a first time-domain location corresponding to a beam of the reference information and a time-domain location of a beam of the first resource set. The first time-domain location is a time-domain location of an i-th valid monitoring opportunity corresponding to the reference information, where i is greater than or equal to 1.

The seventh mapping function is used to indicate a mapping relationship between a first parameter and a radio frame of a beam of the first resource set. The first parameter is a parameter for determining a radio frame corresponding to a beam of a reference signal or a reference resource.

The eighth mapping function is used to indicate a mapping relationship between a second parameter and a slot of a beam of the first resource set. The second parameter is a parameter for determining at least one of a slot or subframe corresponding to a beam of a reference signal or a reference resource.

According to the resource configuring device in the embodiment of the present disclosure, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

According to the resource configuring device in the embodiment of the present disclosure, the first resource set overlaps with a third resource set, or, the first resource set is a subset of the third resource set.

The third resource set includes at least one of the following:
a paging search space set; or,
a random access search space set; or,
a search space set zero; or,
a system message search space set.

It is to be noted here that the foregoing device provided in the embodiments of the present disclosure can implement all steps implemented by the foregoing resource configuring method embodiments, and can achieve the same technical effect. Parts and beneficial effects in this embodiment that are the same as those in the method embodiment will not be described in detail here.

As shown in FIG. 14, one embodiment of the present disclosure further provides a resource obtaining device, which is applied to a terminal, and includes :
a first obtaining unit 1101 configured to obtain a first resource set, where the first resource set is used to carry a paging early indication (PEI).

The first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

The resource obtaining device in the embodiment of the present disclosure further includes: a first receiving unit configured to receive the PEI according to the first resource set.

The resource obtaining device in the embodiment of the present disclosure further includes: a second obtaining unit configured to obtain a second resource set.

The resource obtaining device in the embodiment of the present disclosure further includes: a second receiving unit configured to receive a paging message according to the second resource set.

According to the resource obtaining device in the embodiment of the present disclosure, the first obtaining unit is configured to,
obtain the first resource set according to a master information block (MIB) or system information block (SIB); or,
obtain the first resource set according to reference information;
where the reference information includes at least one of the following:
   resource information of a reference signal; or,
   resource information of a reference resource; or,
   a parameter for determining resource information of a reference signal; or,
   a parameter for determining resource information of a reference resource.

According to the resource obtaining device in the embodiment of the present disclosure, the reference signal includes at least one of the following:
a paging message; or,
a synchronization signal; or,
a tracking reference signal (TRS); or,
a channel state information-reference signal (CSI-RS).

According to the resource obtaining device in the embodiment of the present disclosure, the reference resource includes: a second resource set, where the second resource set is a resource set for transmitting a paging message.

According to the resource obtaining device in the embodiment of the present disclosure, the first obtaining unit is configured to configure at least one of time-domain location information and frequency-domain location information of the first resource set, by using a preset mapping function, according to the reference information;
where the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
where the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

According to the resource obtaining device in the embodiment of the present disclosure, the preset mapping function includes at least one of the following:
a first mapping function, a second mapping function, or a third mapping function;
where the first mapping function is used to indicate a mapping relationship between a radio frame corresponding to the reference information and a radio frame of the first resource set;
where the second mapping function is used to indicate a mapping relationship between a slot of the first resource set and at least one of a radio frame, a subframe and a slot corresponding to the reference information;
where the third mapping function is used to indicate a mapping relationship between a symbol of the first resource set and at least one of a radio frame, a subframe, a slot and a symbol corresponding to the reference information.

According to the resource obtaining device in the embodiment of the present disclosure, the first obtaining unit is configured to, according to association relationship between beam information of the reference information and beam information of the first resource set, obtain a time-domain resource of a beam of the first resource set by using the preset mapping function.

According to the resource obtaining device in the embodiment of the present disclosure, the preset mapping function includes at least one of the following:
a fourth mapping function, a fifth mapping function, a sixth mapping function, a seventh mapping function and/or an eighth mapping function.

The fourth mapping function is used to indicate a mapping relationship between a radio frame corresponding to a beam of the reference information and a radio frame of a beam of the first resource set.

The fifth mapping function is used to indicate a mapping relationship between a slot of a beam of the first resource set and at least one of a slot and subframe corresponding to a beam of the reference information.

The sixth mapping function is used to indicate a mapping relationship between a first time-domain location corresponding to a beam of the reference information and a time-domain location of a beam of the first resource set. The first time-domain location is a time-domain location of an i-th valid monitoring opportunity corresponding to the reference information, where i is greater than or equal to 1.

The seventh mapping function is used to indicate a mapping relationship between a first parameter and a radio frame of a beam of the first resource set. The first parameter is a parameter for determining a radio frame corresponding to a beam of a reference signal or a reference resource.

The eighth mapping function is used to indicate a mapping relationship between a second parameter and a slot of a beam of the first resource set. The second parameter is a parameter for determining at least one of a slot or subframe corresponding to a beam of a reference signal or a reference resource.

According to the resource obtaining device in the embodiment of the present disclosure, in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

According to the resource obtaining device in the embodiment of the present disclosure, the first resource set overlaps with a third resource set, or, the first resource set is a subset of the third resource set.

The third resource set includes at least one of the following:
a paging search space set; or,
a random access search space set; or,
a search space set zero; or,
a system message search space set.

It is to be noted here that the foregoing device provided in the embodiments of the present disclosure can implement all steps implemented by the foregoing resource obtaining method embodiments, and can achieve the same technical effect. Parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium which includes a computer program stored thereon. The computer program is used to cause the processor to execute the following steps:
configuring a first resource set, where the first resource set is used to carry a paging early indication (PEI); where the first resource set includes at least one of the following: a first control resource set zero; or, a first common control resource set; or, a first search space set zero; or, a first common search space set; or, a first subset of a control resource set zero; or, a first subset of a common control resource set; or, a first subset of a search space set zero; or a first subset of a common search space set;
or, obtaining a first resource set, where the first resource set is used to carry a paging early indication (PEI); where the first resource set includes at least one of the following:
   a first control resource set zero; or,
   a first common control resource set; or,
   a first search space set zero; or,
   a first common search space set; or,
   a first subset of a control resource set zero; or,
   a first subset of a common control resource set; or,
   a first subset of a search space set zero; or
   a first subset of a common search space set.

The computer program is used to cause the processor to execute the resource configuring method provided in the embodiment of the present disclosure, or, the computer program is used to cause the processor to execute the resource obtaining method provided in the embodiment of the present disclosure.

The terminal involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or car mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Skilled artisans may implement the described functionality using different methods for each particular application, but such implementation should not be considered beyond the scope of the present disclosure.

Persons having ordinary skill in the art may clearly understand that, for convenient and concise of the description, specific work process of foregoing system, device and unit may refer to a corresponding process in method embodiments, which are not repeated here.

In the embodiments provided in the present disclosure, it should be understood that the disclosed devices and methods may be implemented in other ways. For example, the device embodiments described above are only an example. For example, division of units is only logical function division. There may be other division manners in actual implementation, for example, multiple units or components may be combined or integrated into another system, or some features may be ignored or not implemented. In addition, the mutual coupling, direct coupling, or communication connection shown or discussed may be indirect coupling or communication connection through some interfaces, apparatuses, or units, and may be in electrical, mechanical, or other forms.

The units described as separate components may or may not be physically separated, and components shown as units may or may not be physical units, that is, they may be located in one place, or may be distributed to multiple network units. Part or all of the units may be selected according to actual needs to achieve the purpose of the solutions of the embodiments of the present disclosure.

In addition, various functional units in various embodiments of the present disclosure may be integrated into one processing unit, or each unit may be physically included individually, or two or more units may be integrated into one unit.

Through description of the above embodiments, persons having ordinary skill in the art can clearly understand that the methods of the above embodiments may be implemented by means of software plus a necessary general-purpose hardware platform, and of course may also be implemented by hardware, but in many cases the former is better implementation. Based on this understanding, the essence of the technical solution of the present disclosure or the part that contributes to the related art or the part of the technical solution may be embodied in the form of a software product. The computer software product is stored in a storage medium (such as ROM/RAM, magnetic disk or optical disk), includes several instructions which enables a terminal (which may be a mobile phone, computer, server, air conditioner, or network device, etc.) to execute all or part of the steps of the methods described in various embodiments of the present disclosure.

Obviously, persons having ordinary skill in the art may make various modifications and variations to the present application without departing from the spirit and scope of the present application. In this way, if these modifications and variations of the present application fall within the scope of the claims of the present application and their equivalent technologies, the present application is also intended to include these modifications and variations.

## Claims

1. A resource configuring method, comprising:
configuring, by a network device, a first resource set, wherein the first resource set is used to carry a paging early indication (PEI);
wherein the first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

2. The method according to claim 1, wherein the method further includes:
transmitting, by the network device, the PEI according to the first resource set.

3. The method according to claim 1, wherein the method further includes:
configuring, by the network device, a second resource set.

4. The method according to claim 3, wherein the method further includes:
transmitting a paging message according to the second resource set.

5. The method according to claim 1, wherein the configuring the first resource set, includes:
according to a master information block (MIB) or system information block (SIB), configuring the first resource set;
or,
according to reference information, configuring the first resource set;
wherein the reference information includes at least one of the following:
resource information of a reference signal; or,
resource information of a reference resource; or,
a parameter for determining resource information of a reference signal; or,
a parameter for determining resource information of a reference resource.

6. The method according to claim 5, wherein the reference signal includes at least one of the following:
a paging message; or,
a synchronization signal; or,
a tracking reference signal (TRS); or,
a channel state information-reference signal (CSI-RS).

7. The method according to claim 5, wherein the reference resource includes: a second resource set, wherein the second resource set is a resource set for transmitting a paging message.

8. The method according to claim 5, wherein according to reference information, configuring the first resource set, includes:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

9. The method according to claim 8, wherein the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

10. The method according to claim 8, wherein the configuring the time-domain resource of the first resource set by using the preset mapping function according to the reference information, includes:
according to association relationship between beam information of the reference information and beam information of the first resource set, configuring a time-domain resource of a beam of the first resource set by using the preset mapping function.

11. The method according to claim 10, wherein the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

12. The method according to claim 3, wherein
in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

13. The method according to claim 1, wherein the first resource set overlaps with a third resource set, or, the first resource set is a subset of the third resource set;
the third resource set includes at least one of the following:
a paging search space set; or,
a random access search space set; or,
a search space set zero; or,
a system message search space set.

14. A resource obtaining method, comprising:
obtaining, by a terminal, a first resource set, wherein the first resource set is used to carry a paging early indication (PEI);
wherein the first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

15. The method according to claim 14, wherein the method further includes: receiving the PEI according to the first resource set.

16. The method according to claim 14, wherein the method further includes: obtaining a second resource set.

17. The method according to claim 16, wherein the method further includes: receiving a paging message according to the second resource set.

18. The method according to claim 14, wherein the obtaining the first resource set, includes:
obtaining the first resource set according to a master information block (MIB) or system information block (SIB); or,
obtaining the first resource set according to reference information;
wherein the reference information includes at least one of the following:
resource information of a reference signal; or,
resource information of a reference resource; or,
a parameter for determining resource information of a reference signal; or,
a parameter for determining resource information of a reference resource.

19. The method according to claim 18, wherein the reference signal includes at least one of the following:
a paging message; or,
a synchronization signal; or,
a tracking reference signal (TRS); or,
a channel state information-reference signal (CSI-RS).

20. The method according to claim 18, wherein the reference resource includes: a second resource set, wherein the second resource set is a resource set for transmitting a paging message.

21. The method according to claim 18, wherein the obtaining the first resource set according to the reference information, includes:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

22. The method according to claim 21, wherein the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

23. The method according to claim 21, wherein the obtaining the time-domain resource of the first resource set by using the preset mapping function according to the reference information, includes:
according to association relationship between beam information of the reference information and beam information of the first resource set, obtaining a time-domain resource of a beam of the first resource set by using the preset mapping function.

24. The method according to claim 23, wherein the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

25. The method according to claim 16, wherein
in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

26. The method according to claim 14, wherein the first resource set overlaps with a third resource set, or, the first resource set is a subset of the third resource set;
the third resource set includes at least one of the following:
a paging search space set; or,
a random access search space set; or,
a search space set zero; or,
a system message search space set.

27. A resource configuring device, comprising: a memory, a transceiver and a processor; wherein the memory is used to store a computer program; the transceiver is used to transmit and receive data under the control of the processor; the processor is used to read the computer program in the memory and perform the following operations:
configuring a first resource set, wherein the first resource set is used to carry a paging early indication (PEI);
wherein the first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

28. The device according to claim 27, wherein the processor is further configured to perform the following operations:
according to a master information block (MIB) or system information block (SIB), configuring the first resource set;
or,
according to reference information, configuring the first resource set;
wherein the reference information includes at least one of the following:
resource information of a reference signal; or,
resource information of a reference resource; or,
a parameter for determining resource information of a reference signal; or,
a parameter for determining resource information of a reference resource.

29. The device according to claim 28, wherein the processor is further configured to perform the following operations:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

30. The device according to claim 29, wherein the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

31. The device according to claim 29, wherein the processor is further configured to perform the following operations:
according to association relationship between beam information of the reference information and beam information of the first resource set, configuring a time-domain resource of a beam of the first resource set by using the preset mapping function.

32. The device according to claim 31, wherein the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

33. A resource obtaining device, comprising: a memory, a transceiver and a processor;
wherein the memory is used to store a computer program; the transceiver is used to transmit and receive data under the control of the processor; the processor is used to read the computer program in the memory and perform the following operations:
obtaining a first resource set, wherein the first resource set is used to carry a paging early indication (PEI);
wherein the first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set

34. The device according to claim 33, wherein the processor is further configured to perform the following operations:
obtaining the first resource set according to a master information block (MIB) or system information block (SIB); or,
obtaining the first resource set according to reference information;
wherein the reference information includes at least one of the following:
resource information of a reference signal; or,
resource information of a reference resource; or,
a parameter for determining resource information of a reference signal; or,
a parameter for determining resource information of a reference resource.

35. The device according to claim 34, wherein the processor is further configured to perform the following operations:
configuring at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

36. The device according to claim 35, wherein the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

37. The device according to claim 35, wherein the processor is further configured to perform the following operations:
according to association relationship between beam information of the reference information and beam information of the first resource set, obtaining a time-domain resource of a beam of the first resource set by using the preset mapping function.

38. The device according to claim 37, wherein the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

39. A resource configuring device, comprising:
a first configuration unit configured to configure a first resource set, wherein the first resource set is used to carry a paging early indication (PEI);
wherein the first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

40. The device according to claim 39, wherein the device further includes:
a first transmission unit configured to transmit the PEI according to the first resource set.

41. The device according to claim 39, wherein the device further includes:
a second configuration unit is configured to configure a second resource set.

42. The device according to claim 41, wherein the device further includes:
a second transmission unit configured to transmit a paging message according to the second resource set.

43. The device according to claim 39, wherein the first configuration unit is configured to,
according to a master information block (MIB) or system information block (SIB), configure the first resource set;
or,
according to reference information, configure the first resource set;
wherein the reference information includes at least one of the following:
resource information of a reference signal; or,
resource information of a reference resource; or,
a parameter for determining resource information of a reference signal; or,
a parameter for determining resource information of a reference resource.

44. The device according to claim 43, wherein the reference signal includes at least one of the following:
a paging message; or,
a synchronization signal; or,
a tracking reference signal (TRS); or,
a channel state information-reference signal (CSI-RS).

45. The device according to claim 43, wherein the reference resource includes: a second resource set, wherein the second resource set is a resource set for transmitting a paging message.

46. The device according to claim 43, wherein the first configuration unit is configured to configure at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

47. The device according to claim 46, wherein the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

48. The device according to claim 46, wherein the first configuration unit is configured to, according to association relationship between beam information of the reference information and beam information of the first resource set, configure a time-domain resource of a beam of the first resource set by using the preset mapping function.

49. The device according to claim 48, wherein the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

50. The device according to claim 41, wherein in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

51. The device according to claim 39, wherein the first resource set overlaps with a third resource set, or, the first resource set is a subset of the third resource set;
the third resource set includes at least one of the following:
a paging search space set; or,
a random access search space set; or,
a search space set zero; or,
a system message search space set.

52. A resource obtaining device, comprising:
a first obtaining unit configured to obtain a first resource set, wherein the first resource set is used to carry a paging early indication (PEI);
wherein the first resource set includes at least one of the following:
a first control resource set zero; or,
a first common control resource set; or,
a first search space set zero; or,
a first common search space set; or,
a first subset of a control resource set zero; or,
a first subset of a common control resource set; or,
a first subset of a search space set zero; or
a first subset of a common search space set.

53. The device according to claim 52, wherein the device further includes:
a first receiving unit configured to receive the PEI according to the first resource set.

54. The device according to claim 52, wherein the device further includes:
a second obtaining unit configured to obtain a second resource set.

55. The device according to claim 54, wherein the device further includes:
a second receiving unit configured to receive a paging message according to the second resource set.

56. The device according to claim 52, wherein the first obtaining unit configured to,
obtain the first resource set according to a master information block (MIB) or system information block (SIB); or,
obtain the first resource set according to reference information;
wherein the reference information includes at least one of the following:
resource information of a reference signal; or,
resource information of a reference resource; or,
a parameter for determining resource information of a reference signal; or,
a parameter for determining resource information of a reference resource.

57. The device according to claim 56, wherein the reference signal includes at least one of the following:
a paging message; or,
a synchronization signal; or,
a tracking reference signal (TRS); or,
a channel state information-reference signal (CSI-RS).

58. The device according to claim 56, wherein the reference resource includes: a second resource set, wherein the second resource set is a resource set for transmitting a paging message.

59. The device according to claim 56, wherein the first obtaining unit configured to configure at least one of time-domain location information and frequency-domain location information of the first resource set, by using a preset mapping function, according to the reference information;
wherein the time-domain location information includes at least one of a time-domain location of a time-domain resource unit, and offset information of the time-domain location of the time-domain resource unit relative to a time-domain location of the reference information; and the time-domain resource unit includes at least one of a radio frame, a subframe, a slot and a symbol;
wherein the frequency-domain location information includes at least one of a frequency-domain location of a frequency-domain resource unit, and offset information of the frequency-domain location of the frequency-domain resource unit relative to a frequency-domain location of the reference information; and the frequency-domain resource unit includes at least one of a resource block group, a resource block, a resource unit group, and a frequency-domain location of a resource unit.

60. The device according to claim 59, wherein the preset mapping function includes at least one of the following: a first mapping function, a second mapping function, or a third mapping function;
wherein the first mapping function is used to indicate a mapping relationship between a radio frame corresponding to the reference information and a radio frame of the first resource set;
wherein the second mapping function is used to indicate a mapping relationship between a slot of the first resource set and at least one of a radio frame, a subframe and a slot corresponding to the reference information;
wherein the third mapping function is used to indicate a mapping relationship between a symbol of the first resource set and at least one of a radio frame, a subframe, a slot and a symbol corresponding to the reference information.

61. The device according to claim 59, wherein the first obtaining unit is configured to, according to association relationship between beam information of the reference information and beam information of the first resource set, obtain a time-domain resource of a beam of the first resource set by using the preset mapping function.

62. The device according to claim 61, wherein the preset mapping function includes at least one of the following: a fourth mapping function, a fifth mapping function, a sixth mapping function, a seventh mapping function and/or an eighth mapping function;
the fourth mapping function is used to indicate a mapping relationship between a radio frame corresponding to a beam of the reference information and a radio frame of a beam of the first resource set;
the fifth mapping function is used to indicate a mapping relationship between a slot of a beam of the first resource set and at least one of a slot and subframe corresponding to a beam of the reference information;
the sixth mapping function is used to indicate a mapping relationship between a first time-domain location corresponding to a beam of the reference information and a time-domain location of a beam of the first resource set; wherein the first time-domain location is a time-domain location of an i-th valid monitoring opportunity corresponding to the reference information, where i is greater than or equal to 1;
the seventh mapping function is used to indicate a mapping relationship between a first parameter and a radio frame of a beam of the first resource set; the first parameter is a parameter for determining a radio frame corresponding to a beam of a reference signal or a reference resource;
the eighth mapping function is used to indicate a mapping relationship between a second parameter and a slot of a beam of the first resource set; the second parameter is a parameter for determining at least one of a slot or subframe corresponding to a beam of a reference signal or a reference resource.

63. The device according to claim 54, wherein in case that the first resource set includes at least one first control resource set zero, the second resource set is a second control resource set zero;
or, in case that the first resource set includes at least one first common control resource set, the second resource set is a second common control resource set;
or, in case that the first resource set includes at least one first search space set zero, the second resource set is a second search space set zero;
or, in case that the first resource set includes at least one first common search space set, the second resource set is a second common search space set;
or, in case that the first resource set includes at least one first subset of a control resource set zero, the second resource set is a second subset of the control resource set zero;
or, in case that the first resource set includes at least one first subset of a common control resource set, the second resource set is a second subset of the common control resource set;
or, in case that the first resource set includes at least one first subset of a search space set zero, the second resource set is a second subset of the search space set zero;
or, in case that the first resource set includes at least one first subset of a common search space set, the second resource set is a second subset of the common search space set.

64. The device according to claim 52, wherein the first resource set overlaps with a third resource set, or, the first resource set is a subset of the third resource set;
the third resource set includes at least one of the following:
a paging search space set; or,
a random access search space set; or,
a search space set zero; or,
a system message search space set.

65. A processor-readable storage medium, comprising a program instruction stored thereon; wherein the program instruction is used to cause a processor to perform steps of the resource configuring method according to any one of claims 1 to 13, or to perform steps of the resource obtaining method according to any one of claims 14 to 26.
